# EUROPEAN PATENT SPECIFICATION

(11) **EP 4 372 574 B1**
(45) Date of publication and mention of the grant of the patent: **12.02.2025**
(21) Application number: 23156244.8
(22) Date of filing: 13.02.2023
(51) Int. Cl.: G06F 13/40, G06F 13/38, G06F 13/42

(54) **ELECTRONIC DEVICE HAVING M.2 CONNECTOR COMPATIBLE WITH TWO COMMUNICATION MODULES, METHOD FOR MAKING TWO COMMUNICATION MODULES BE COMPATIBLE IN SINGLE M.2 CONNECTOR, AND COMPUTER-IMPLEMENTED METHOD THEREOF**
ELEKTRONISCHE VORRICHTUNG MIT M.2-VERBINDER KOMPATIBEL MIT ZWEI KOMMUNIKATIONSMODULEN, VERFAHREN ZUR KOMPATIBILITÄT ZWEIER KOMMUNIKATIONSMODULE IN EINEM M.2-VERBINDER UND COMPUTERIMPLEMENTIERTES VERFAHREN DAFÜR
DISPOSITIF ÉLECTRONIQUE AYANT UN CONNECTEUR M.2 COMPATIBLE AVEC DEUX MODULES DE COMMUNICATION, PROCÉDÉ POUR RENDRE COMPATIBLE DEUX MODULES DE COMMUNICATION

(30) Priority: 18.11.2022 CN 202211449032
(43) Date of publication of application: 22.05.2024
(73) Proprietor: Getac Technology Corporation, New Taipei City (TW)
(72) Inventor: ZHANG, Zhi-Kai, Taipei City 11568 (TW); CHEN, Yu-Ting, Taipei City 11568 (TW)
(74) Representative: Viering, Jentschura & Partner mbB Patent- und Rechtsanwälte

(56) References cited:
- WO-A1-2018/140045
- PERIPHERAL COMPONENT INTERCONNECT SPECIAL INTEREST GROUP, PERIPHERAL COMPONENT INTERCONNECT SPECIAL INTEREST GROUP, 3855 SW 153RD DRIVE BEAVERTON, OR 97003, US, 2 November 2022 (2022-11-02), XP040732485

## Description

### BACKGROUND

### Technical Field

The present disclosure relates to the application of the M.2 connector. In particular, the present disclosure relates to an electronic device having an M.2 connector compatible with two communication modules with different pin definitions, a method for making two communication modules be compatible in a single M.2 connector, and a computer-implemented method thereof.

### Related Art

4G communication technology has been widely used in various electronic devices. For example, an electronic device can use the 4G communication function by being equipped with a 4G module. In recent years, 5G communication technology, a new generation of the communication technology, has been developed, and an electronic device can use the 5G communication function by being equipped with a 5G module.

Both the 4G module and the 5G module are connected to an electronic device through the M.2 connectors, however, the pin definitions of the connection pins of the 4G module and the 5G module are different, such that the 4G module and the 5G module cannot be directly compatible with the same M.2 connector.
WO 2018/140045 A1 discloses an electronic device comprising: an M.2 connector having a first pin and a second pin a protection circuit coupled to the first pin and the second pin; and a processor configured to determine whether a module inserted into the M.2 connector is a standard module or a non-standard module, wherein in response to that the processor determines that the module inserted into the M.2 connector is the standard module, the processor causes the protection circuit to execute a protection process, and in response to that the processor determines that the module inserted into the M.2 connector is the non-standard module, the processor causes the protection circuit not to execute the protection process.
M2 connector specifications and requirements are know from "peripheral component interconnect special interest group", "peripheral component interconnect special interest group", 3855 SW 153RD DRIVE BEAVERTON, OR 97003, US, 2 November 2022 (retrieved on 2022-11-02), XP040732485.

### SUMMARY

The present disclosure provides an electronic device according to independent claim 1. The electronic device includes an M.2 connector, a protection circuit, and a processor. The M.2 connector has a first pin and a second pin. The protection circuit is coupled to the first pin and the second pin. The processor is configured to determine whether a module inserted into the M.2 connector is a 4G communication technology module (in the following called: "4G module") or a 5G communication technology module (in the following called: "5G module"). In response to that the processor determines that the module inserted into the M.2 connector is the 4G module, the processor causes the protection circuit to execute a protection process. In response to that the processor determines that the module inserted into the M.2 connector is the 5G module, the processor causes the protection circuit not to execute the protection process. In the protection process, the protection circuit blocks an electrical connection between the first pin and a first power supply and blocks an electrical connection between the second pin and a reset signal. A pin number of the first pin is 24, and a pin number of the second pin is 50. The dependent claims 2 and 3 show further embodiments of the said electronic device.

Further, the present disclosure provides a method for making a 4G module and a 5G module be compatible in a single M.2 connector according to independent claim 4. The method includes: determining whether a module inserted into an M.2 connector is a 4G module or a 5G module; executing a protection process in response to determining that the module inserted into the M.2 connector is the 4G module; and not executing the protection process in response to determining that the module inserted into the M.2 connector is the 5G module. The protection process includes: blocking an electrical connection between a first pin of the M.2 connector and a first power supply; and blocking an electrical connection between a second pin of the M.2 connector and a reset signal. A pin number of the first pin is 24, and a pin number of the second pin is 50. The dependent claims 5 and 6 show further embodiments of the said method.

Further, the present disclosure provides a computer-implemented method for making a 4G module and a 5G module be compatible in a single M.2 connector according to independent claim 7. The computer-implemented method includes the following steps executed by a processor: determining whether a module inserted into an M.2 connector is a 4G module or a 5G module; causing a protection circuit to execute a protection process in response to determining that the module inserted into the M.2 connector is the 4G module; and causing the protection circuit not to execute the protection process in response to determining that the module inserted into the M.2 connector is the 5G module. The protection process includes: blocking an electrical connection between a first pin of the M.2 connector and a first power supply; and blocking an electrical connection between a second pin of the M.2 connector and a reset signal. A pin number of the first pin is 24, and a pin number of the second pin is 50. The dependent claims 8 and 9 show further embodiments of the said computer-implemented method.

To sum up, the electronic device, the method for making the 4G module and the 5G module be compatible in the single M.2 connector, and the computer-implemented method thereof can determine whether a module inserted into an M.2 connector is a 4G module or a 5G module. In response to determining that the module inserted into the M.2 connector is the 4G module, the electronic device, the method for making the 4G module and the 5G module be compatible in the single M.2 connector, and the computer-implemented method thereof according to any embodiments of the present disclosure cause a protection circuit to execute a protection process to prevent the 4G module being affected by a first power supply coupled to a first pin of the M.2 connector and by a reset signal coupled to a second pin of the M.2 connector. In response to determining that the module inserted into the M.2 connector is the 5G module, the electronic device, the method for making the 4G module and the 5G module be compatible in the single M.2 connector, and the computer-implemented method thereof according to any embodiments of the present disclosure cause the protection circuit not to execute the protection process, such that the 5G module can connect to the first power supply through the first pin and can connect to the reset signal through the second pin. A pin number of the first pin is 24, and a pin number of the second pin is 50. In this way, the 4G module and the 5G module can share the same M.2 connector (i.e., in some embodiments, use the same printed circuit board assembly (PCBA)) without configuring additional respective circuits.

Detailed features and advantages of the present disclosure are described in detail in the following implementations, and the content of the implementations is sufficient for a person skilled in the art to understand and implement the technical content of the present disclosure. A person skilled in the art can easily understand the objectives and advantages related to the present disclosure according to the contents disclosed in this specification, the claims, and the drawings.

### BRIEF DESCRIPTION OF THE DRAWINGS

FIG. 1 illustrates a schematic block diagram of an electronic device according to an embodiment of the present disclosure.
FIG. 2 illustrates a schematic flow chart of a method for making two communication modules be compatible in a single M.2 connector or a computer-implemented method thereof according to an embodiment of the present disclosure.
FIG. 3 illustrates a schematic flow chart of the step S20 according to an embodiment of the present disclosure.
FIG. 4 illustrates a schematic flow chart of the step S30 according to an embodiment of the present disclosure.
FIG. 5 illustrates a schematic flow chart of the step S22 according to an embodiment of the present disclosure.
FIG. 6 illustrates a schematic flow chart of the step S32 according to an embodiment of the present disclosure.
FIG. 7 illustrates a schematic circuit diagram of a protection circuit according to an implementation of the present disclosure.

### DETAILED DESCRIPTION

To make the objectives, features, and advantages of the embodiments of the present disclosure more comprehensible, the following provides detailed descriptions with reference to the accompanying drawings.

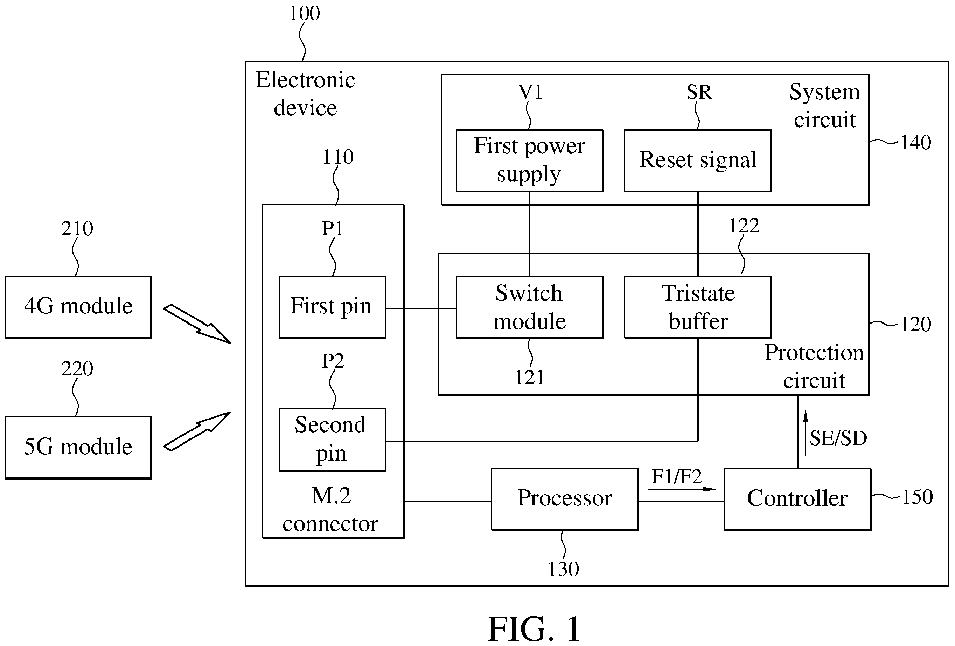

FIG. 1 illustrates a schematic block diagram of an electronic device according an embodiment of the present application. Please refer to FIG. 1. The electronic device 100 can perform a method for making two communication modules be compatible in a single M.2 connector or a computer-implemented method thereof according to any embodiments of the present disclosure, such that two different communication modules can be compatible with the same M.2 connector of the electronic device 100. In an embodiment, the electronic device 100 includes at least one M.2 connector 110, a protection circuit 120, and a processor 130. The protection circuit 120 is coupled to the M.2 connector 110, and the processor 130 is coupled to the M.2 connector 110 and the protection circuit 120. Furthermore, the electronic device 100 may further include a system circuit 140, and the protection circuit 120 is coupled between the system circuit 140 and the M.2 connector 110. For the sake of convenience, the following takes the number of the M.2 connector 110 as one for illustration, but the number of the M.2 connector 110 is not limited thereto.

The M.2 connector 110 has a plurality of pins, and the plurality of pins can be configured to be connected to a communication module. For example, the connection interface (which has a plurality of connection pins) of the communication module is inserted into the slot of the M.2 connector to allow the connection pins of the connection interface contact the pins of the M.2 connector, so that the communication module is connected to the M.2 connector. The communication module is either a 4G module 210 configured to provide a 4G communication function or a 5G module 220 configured to provide a 5G communication function. In some implementations, the type of the M.2 connector 110 may be B Key. Furthermore, the connection interface of the 4G module 210 may be USB 3.0, and the connection interface of the 5G module 220 may be PCle.

In some embodiments, the system circuit 140 is a system circuit that is configured corresponding to the requirements for the operation of the 5G module 220 and can be directly utilized by the 5G module 220. In other words, in some embodiments, after the 5G module 220 is inserted into the M.2 connector 110, the 5G module 220 can operate normally through the system circuit 140 to provide the electronic device 100 with a 5G communication function.

The system circuit 140 at least includes a first power supply V1 and a reset signal SR. Wherein, the first power supply V1 is coupled to a first pin P1 of the plurality of pins of the M.2 connector 110, and the reset signal SR is coupled to a second pin P2 of the plurality of pins of the M.2 connector.

In some implementations the 4G module 210 is implemented with a module whose product serial number is EM7511 and the 5G module 220 is implemented with a module whose product serial number is EM9190. According to the invention, the pin number of the first pin P1 is 24, and the pin number of the second pin P2 is 50.

In some implementations, the pin name of a connection pin in the 5G module 220 configured to be connected to the first pin P1 of the M.2 connector 110 may be defined as +3.3V, and the first power supply V1 in the system circuit 140 is 3.3 volts. Furthermore, the pin name of a connection pin in the 5G module 220 configured to be connected to the second pin P2 of the M.2 connector 110 may be defined as PCIE_PREST_N, and the reset signal SR is a signal in the PCIe interface for resetting. On the other hand, the pin name of a connection pin in the 4G module 210 configured to be connected to the first pin P1 of the M.2 connector 110 may be defined as PCM_DOUT/I2S DOUT, and the signal potential for this connection pin is 1.8 volts, which is different from the signal potential for the 5G module 220. Furthermore, the pin name of a connection pin in the 4G module 210 configured to be connected to the second pin P2 of the M.2 connector 110 may be defined as PCIE_PREST_N. In this implementation, although the pin name of the connection pin in the 4G module 210 configured to be connected to the second pin P2 of the M.2 connector 110 is the same as the pin name of the connection pin in the 5G module 220 configured to be connected to the second pin P2 of the M.2 connector 110, the 4G module 210 does not use the signal on this pin because the connection interface of the 4G module 210 is USB 3.0.

In order to make the 4G module 210 whose pin definition is different from the pin definition of the 5G module 220 can also operate normally through the system circuit 140 so as to provide the electronic device 100 with a 4G communication function after the 4G module 210 is inserted into the M.2 connector 110, the protection circuit 120 according to one or some embodiments of the present disclosure is coupled between the first pin P1 and the second pin P2 of the M.2 connector 110 and the first power supply V1 and the reset signal SR of the system circuit 140. The protection circuit 120 can be configured to control an electrical connection between the first pin P1 of the M.2 connector 110 and the first power supply V1 in the system circuit 140, and the protection circuit 120 can also be configured to control an electrical connection between the second pin P2 of the M.2 connector 110 and the reset signal SR in the system circuit 140.

The processor 130 is configured to determine whether a communication module inserted into the M.2 connector 110 is a 4G module 210 or a 5G module 220, and the processor 130 is also configured to control the operation of the protection circuit 120 according to the determination result. As such, no matter the communication module inserted into the M.2 connector 110 is the 4G module 210 or the 5G module 220, the communication module inserted into the M.2 connector 110 can operate normally through the system circuit 140 so as to provide the electronic device 100 with a corresponding 4G or a 5G communication function. In some implementations, the processor 130 may be implemented by using a SCO (system on chip), a CPU (central processing unit), a MCU (microprocessor), a AP (application processor), a DSP (digital signal processor), an ASIC (application specific integrated circuit), any combination thereof, or any suitable circuits, but the present disclosure is not limited thereto.

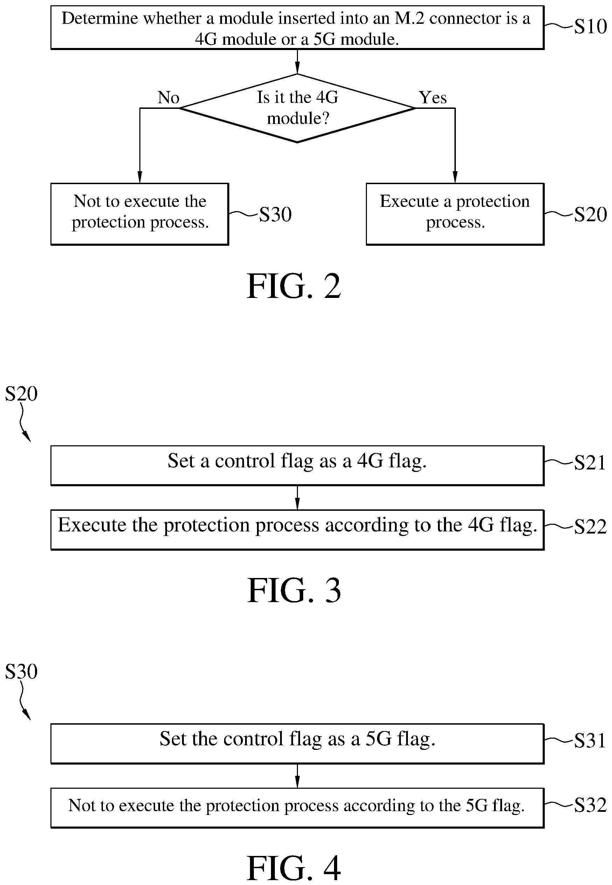

FIG. 2 illustrates a schematic flow chart of a method for making two communication modules be compatible in a single M.2 connector or a computer-implemented method according to an embodiment of the present disclosure. Please refer to FIG. 1 and FIG. 2. In an embodiment of the method for making two communication modules be compatible in the single M.2 connector or the computer-implemented method, the electronic device 100 can firstly use the processor 130 to determine whether a communication module inserted into the M.2 connector 110 is a 4G module 210 or a 5G module 220 (the step S10). In an embodiment of the step S10, the processor 130 can make a determination by using a BIOS (basic input/output system) to read a device list during the booting of the electronic device 100. For example, the processor 130 can use the BIOS to read a USB 3.0 list and a PCIe list. In response to that the processor 130 reads that the device name of the inserted communication module is presented in the USB 3.0 list, the processor 130 can determine that the communication module inserted into the M.2 connector 110 is the 4G module 210. On the other hand, in response to that the processor 130 reads that the device name of the inserted communication module is presented in the PCIe list, the processor 130 can determine that the communication module inserted into the M.2 connector 110 is the 5G module 220.

In response to that the processor 130 determines that the communication module inserted into the M.2 connector 110 is the 4G module 210, the electronic device 100 causes the protection circuit 120 to execute a protection process by using the processor 130 (the step S20). On the other hand, in response to that the processor 130 determines that the communication module inserted into the M.2 connector 110 is the 5G module 220, the electronic device 100 causes the protection circuit 120 not to execute the protection process by using the processor 130 (the step S30).

In some embodiments, the electronic device 100 may further include a controller 150, and the controller 150 is coupled between the processor 130 and the protection circuit 120. The controller 150 is configured to control the operation of the protection circuit 120 according to a control flag set by the processor 130.

FIG. 3 illustrates a schematic flow chart of the step S20 according to an embodiment of the present disclosure. Please refer to FIG. 1 to FIG. 3. In an embodiment of the step S20, the processor 130 sets the control flag as a 4G flag F1 (the step S21), and the controller 150 generates, according to the control flag set as the 4G flag F1, an enable signal SE to the protection circuit 120, such that the protection circuit 120 executes the protection process due to the reception of the enable signal SE (the step S22).

FIG. 4 illustrates a schematic flow chart of the step S30 according to an embodiment of the present disclosure. Please refer to FIG. 1 to FIG. 4. As compared with the step S20, in an embodiment of the step S30, the processor 130 sets the control flag as a 5G flag F2 (the step S31), and the controller 150 generates, according to the control flag set as the 5G flag F2, a disable signal SD to the protection circuit 120, such that the protection circuit 120 does not execute the protection process due to the reception of the disable signal SD (the step S32).

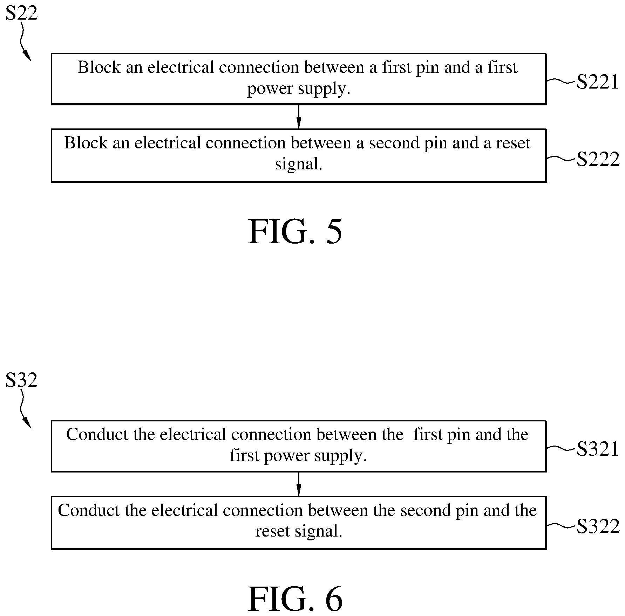

FIG. 5 illustrates a schematic flow chart of the step S22 according to an embodiment of the present disclosure. Please refer to FIG. 1 to FIG. 3 and FIG. 5. In some embodiments, in the protection process (i.e., in the step S22), the protection circuit 120 blocks, according to the enable signal SE, an electrical connection between the first pin P1 of the M.2 connector 110 and the first power supply V1 in the system circuit 140 (the step S221), and the protection circuit 120 blocks, according to the enable signal SE, an electrical connection between the second pin P2 of the M.2 connector 110 and reset signal SR in the system circuit 140 (step S222).

In some embodiments, the protection circuit 120 includes a switch module 121 and a tristate buffer 122. The switch module 121 is coupled between the first pin P1 of the M.2 connector 110 and the first power supply V1 in the system circuit 140 to control the electrical connection between the first pin P1 and the first power supply V1. The tristate buffer 122 has an input terminal and an output terminal. The input terminal of the tristate buffer 122 is coupled to the reset signal SR and the output terminal of the tristate buffer 122 is coupled to the second pin P2 of the M.2 connector 110 to control the electrical connection between the second pin P2 and the reset signal SR.

In an embodiment of the step S221, the switch module 121 of the protection circuit 120 is disabled due to the reception of the enable signal SE. Furthermore, the switch module 121 disconnects the electrical connection between the first pin P1 and the first power supply V1 after the switch module 121 is disabled so as to prevent the first power supply V1 from affecting the 4G module 210 through the first pin P1, for example, the 4G module 210 may be burned by the first power supply V1 through the first pin P1. In some implementations, the switch module 121 may be implemented by using any type of switch components, for example, but not limited to transistors, transmission gates, or the like. In other implementations, the switch module 121 may be implemented by using a switch module with reverse current protection function to prevent from that the current in the 4G module 210 flows into the system circuit 140 through the first pin P1 so as to affect the system circuit 140.

In an embodiment of the step S222, the tristate buffer 122 of the protection circuit 120 is disabled due to the reception of the enable signal SE. Furthermore, the output terminal of the tristate buffer 122 is in a high-impedance state after the tristate buffer 122 is disabled so as to prevent the reset signal SR from causing the 4G module 210 to malfunction through the second pin P2, for example, the rest signal SR may cause the 4G module 210 to be unrecognized in the power cycling.

FIG. 6 illustrates a schematic flow chart of the step S32 according to an embodiment of the present disclosure. Please refer to FIG. 1, FIG. 2, and FIG. 4 to FIG. 6. In some embodiments, in response to that the protection circuit 120 does not execute the protection process (i.e., the step S32), the switch module 121 of the protection circuit 120 can conduct, according to the disable signal SD, the electrical connection between the first pin P1 of the M.2 connector 110 and the first power supply (the step S321). Furthermore, the tristate buffer 122 of the protection circuit 120 can be enabled due to the reception of the disable signal SD to conduct the electrical connection between the second pin P2 of the M.2 connector 110 and the reset signal SR, such that the reset signal SR can be provided for the 5G module 220 through the second pin P2 after being buffered by the tristate buffer 122 (the step S322).

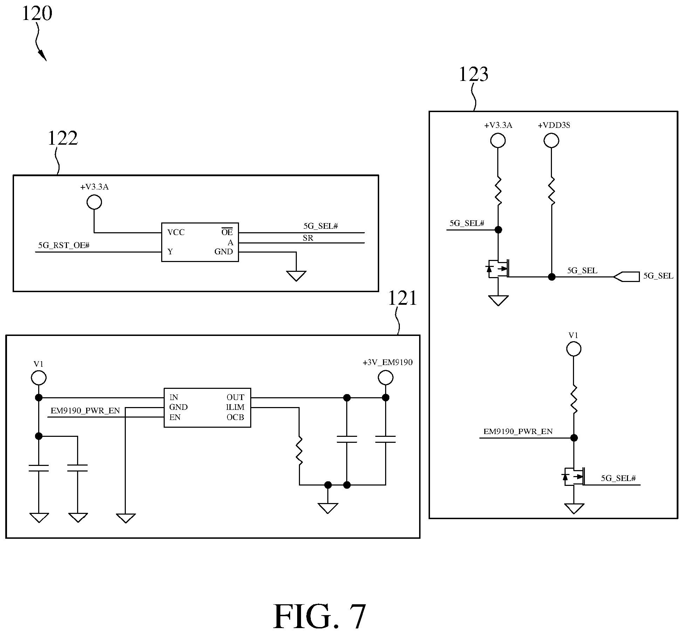

In some implementations, the circuits of the protection circuit 120 may be schematically shown in FIG. 7. In FIG. 7, the protection circuit 120 includes a switch module 121, a tristate buffer 122, and a control module 123. In the switch module 121, a power switch chip, for example, but not limited to a power switch chip with a product serial number APL3552 has six connection pins, a connection pin IN, a connection pin GND, a connection pin EN, a connection pin OUT, a connection pin ILIM, and a connection pin OCB, respectively. The connection pin IN is configured to be electrically connected to the first power supply V1, and two capacitors are electrically connected between the connection pin IN and a ground signal. The connection pin EN is configured to be electrically connected to a control signal EM9190_PWR_EN generated by the control module 123. The connection pin GND of the power switch chip is configured to be electrically connected to the ground signal. The connection pin OUT is configured to be electrically connected to the first pin P1 of the M.2 connector 110, and two capacitors are electrically connected between the connection pin OUT and the ground signal. The connection pin ILIM is configured to be electrically connected to a resistor and is coupled to the ground signal through the resistor. The connection pin OCN is floating. In the tristate buffer 122, a tristate buffer chip, for example, but not limited to a tristate buffer chip with a product serial number 74AHC1G125 has five connection pins, a connection pin VCC, a connection pin Y, a connection pin O̅E̅, a connection pin A, and a connection pin GND, respectively. The connection pin VCC is configured to be electrically connected to a voltage signal +V3.3A. The connection pin Y (i.e., the output terminal of the tristate buffer 122) is configured to be electrically connected to the second pin P2 of the M.2 connector 110 to output a signal 5G_RST_OE#. The connection pin O̅E̅ is configured to be electrically connected to a control signal 5G_SEL# generated by the control module 123. The connection pin A (i.e., the input terminal of the tristate buffer 122) is configured to be electrically connected to the reset signal SR. The connection pin GND of the tristate buffer chip is configured to be electrically connected to the ground signal. In the control module 123, a control terminal of a first transistor is configured to be electrically connected to a control signal 5G_SEL (i.e., the enable signal SE or the disable signal SD) generated by the controller 150, and the control terminal of the first transistor is electrically connected to a voltage signal +VDD3S through a resistor. A first connection terminal of the first transistor is electrically connected to the ground signal, and a second connection terminal of the first transistor is electrically connected to the voltage signal +V3.3A through a resistor. In this implementation, the control signal 5G_SEL# is generated on the second connection terminal of the first transistor. A control terminal of a second transistor is configured to be electrically connected to the second connection terminal of the first transistor to receive the control signal 5G_SEL#. A first connection terminal of the second transistor is electrically connected to the ground signal, and a second connection terminal of the second transistor is electrically connected to the first power supply V1 through a resistor. In this implementation, the control signal EM9190_PWR_EN configured to be provided for the switch module 121 is generated on the second connection terminal of the second transistor.

In some implementations, after the controller 150 generates a control signal 5G_SEL with a logic value of 0 (i.e., enable signal SE) according to the 4G flag F1, the first transistor of the control module 123 of the protection circuit 120 is cutoff to generate a control signal 5G_SEL# with a logic value of 1, and the second transistor of the control module 123 of the protection circuit 120 is conducted due to the control signal 5G_SEL# so as to generate a control signal EM9190_PWR_EN with a logic value of 0. In this case, the switch module 121 is disabled due to the reception of the control signal EM9190_PWR_EN with the logic value of 0, thereby disconnecting the electrical connection between the first pin P1 and the first power supply V1. Furthermore, the tristate buffer 122 is disabled due to the reception of the control signal 5G_SEL# with the logic value of 1, such that a high-impedance state (i.e., the signal 5G_RST_OE# is a high-impedance signal) is presented on the connection pin Y (i.e., the output terminal of the tristate buffer 122). After the controller 150 generates a control signal 5G_SEL with a logic value of 1 (i.e., the disable signal SD) according to the 5G flag F2, the first transistor of the control module 123 of the protection circuit 120 is conducted and generates a control signal 5G_SEL# with a logic value of 0, and the second transistor of the control module 123 of the protection circuit 120 is cutoff according to the control signal 5G_SEL# so as to generate a control signal EM9190_PWR_EN with a logic value of 1. In this case, the switch module 121 is enabled due to the reception of the control signal EM9190_PWR_EN with the logic value of 1, thereby conducting the electrical connection between the first pin P1 and the first power supply V1 (i.e., in this embodiment, the path from the connection pin IN to the connection pin OUT). Furthermore, the tristate buffer 122 is enabled due to the reception of the control signal 5G_SEL# with the logic value of 0, thereby conducting the electrical connection between the second pin P2 and the reset signal SR (i.e., in this embodiment, the path from the connection pin A to the connection pin Y). In this case, the signal 5G_RST OE# is the reset signal SR.

To sum up, the electronic device 100, the method for making the 4G module 210 and the 5G module 220 be compatible in the single M.2 connector 110 and the computer-implemented method thereof can determine whether a module inserted into an M.2 connector 110 is a 4G module 210 or a 5G module 220. In response to determining that the module inserted into the M.2 connector 110 is the 4G module 210, the electronic device 100, the method for making the 4G module 210 and the 5G module 220 be compatible in the single M.2 connector 110 and the computer-implemented method thereof according to any embodiments of the present disclosure cause a protection circuit 120 to execute a protection process to prevent the 4G module 210 being affected by a first power supply V1 coupled to a first pin P1 of the M.2 connector 110 and by a reset signal SR coupled to a second pin P2 of the M.2 connector 110. In response to determining that the module inserted into the M.2 connector 110 is the 5G module 220, the electronic device 100, the method for making the 4G module 210 and the 5G module 220 be compatible in the single M.2 connector 110 and the computer-implemented method thereof according to any embodiments of the present disclosure cause the protection circuit 120 not to execute the protection process, such that the 5G module 220 can connect to the first power supply V1 through the first pin P1 and can connect to the reset signal SR through the second pin P2. In this way, the 4G module 210 and the 5G module 220 can share the same M.2 connector 110 (i.e., in some embodiments, use the same printed circuit board assembly (PCBA)) without configuring additional respective circuits.

## Claims

1. An electronic device (100), comprising:
an M.2 connector (110) having a first pin (P1) and a second pin (P2);
a protection circuit (120) coupled to the first pin (P1) and the second pin (P2); and
a processor (130) configured to determine whether a module inserted into the M.2 connector (110) is a 4G communication technology module (210) or a 5G communication technology module (220), wherein in response to that the processor (130) determines that the module inserted into the M.2 connector (110) is the 4G communication technology module (210), the processor (130) is configured to cause the protection circuit (120) to execute a protection process, and in response to that the processor (130) determines that the module inserted into the M.2 connector (110) is the 5G communication technology module (220), the processor (130) is configured to cause the protection circuit (120) not to execute the protection process;
**characterized in that**; in the protection process, the protection circuit (120) is configured to block an electrical connection between the first pin (P1) and a first power supply (V1) and to block an electrical connection between the second pin (P2) and a reset signal (SR);
wherein a pin number of the first pin (P1) is 24, and a pin number of the second pin (P2) is 50.

2. The electronic device (100) of the previous claim, further comprising:
a controller (150) configured to control the protection circuit (120) according to a control flag;
wherein, in response to that the processor (130) determines that the module inserted into the M.2 connector (110) is the 4G communication technology module (210), the processor (130) sets the control flag as a 4G flag (F1), such that the controller (150) causes, according to the 4G flag (F1), the protection circuit (120) to execute the protection process; and
wherein, in response to that the processor (130) determines that the module inserted into the M.2 connector (110) is the 5G communication technology module (220), the processor (130) sets the control flag as a 5G flag (F2), such that the controller (150) causes, according to the 5G flag (F2), the protection circuit (120) not to execute the protection process.

3. The electronic device (100) of any of the previous claims, wherein the protection circuit (120) comprises:
a switch module (121) coupled between the first pin (P1) and the first power supply (V1), wherein in the protection process, the switch module (121) disconnects the electrical connection between the first pin (P1) and the first power supply (V1); and
a tristate buffer (122) having an input terminal and an output terminal, wherein the input terminal is coupled to the reset signal (SR), and the output terminal is coupled to the second pin (P2), and wherein in the protection process, the output terminal of the tristate buffer (122) is in a high-impedance state.

4. A method for making a 4G communication technology module (210) and a 5G communication technology module (220) be compatible in a single M.2 connector (110), comprising:
determining whether a module inserted into an M.2 connector (110) is a 4G communication technology module (210) or a 5G communication technology module (220);
executing a protection process in response to determining that the module inserted into the M.2 connector (110) is the 4G communication technology module (210); and
not executing the protection process in response to determining that the module inserted into the M.2 connector (110) is the 5G communication technology module (220);
**characterized in that**, the protection process comprises:
blocking an electrical connection between a first pin (P1) of the M.2 connector (110) and a first power supply (V1); and
blocking an electrical connection between a second pin (P2) of the M.2 connector (110) and a reset signal (SR);
wherein a pin number of the first pin (P1) is 24, and a pin number of the second pin (P2) is 50.

5. The method of the previous claim, wherein
the step of executing the protection process in response to determining that the module inserted into the M.2 connector (110) is the 4G communication technology module (210) comprises:
setting a control flag as a 4G flag (F1); and
executing the protection process according to the 4G flag (F1); and
the step of not executing the protection process in response to determining that the module inserted into the M.2 connector (110) is the 5G communication technology module (220) comprises:
setting the control flag as a 5G flag (F2); and
not executing the protection process according to the 5G flag (F2).

6. The method of claim 4 or 5, wherein the step of blocking the electrical connection between the first pin (P1) of the M.2 connector (110) and the first power supply (V1) is disabling a switch module (121) coupled between the first pin (P1) and the first power supply (V1) to disconnect the electrical connection between the first pin (P1) and the first power supply (V1) through the switch module (121), and wherein the step of blocking the electrical connection between the second pin (P2) of the M.2 connector (110) and the reset signal (SR) is disabling a tristate buffer (122) coupled between the second pin (P2) and the reset signal (SR), wherein an input terminal of the tristate buffer (122) is coupled to the reset signal (SR), and an output terminal of the tristate buffer (122) is coupled to the second pin (P2), and wherein the output terminal of the tristate buffer (122) is in a high-impedance state after the tristate buffer is disabled.

7. A computer-implemented method for making a 4G communication technology module (210) and a 5G communication technology module (220) be compatible in a single M.2 connector (110), comprising the following steps executed by a processor (130):
determining whether a module inserted into an M.2 connector (110) is a 4G communication technology module (210) or a 5G communication technology module (220);
causing a protection circuit (120) to execute a protection process in response to determining that the module inserted into the M.2 connector (110) is the 4G communication technology module (210); and
causing the protection circuit (120) not to execute the protection process in response to determining that the module inserted into the M.2 connector (110) is the 5G communication technology module (220);
**characterized in that**, the protection process comprises:
blocking an electrical connection between a first pin (P1) of the M.2 connector (110) and a first power supply (V1); and
blocking an electrical connection between a second pin (P2) of the M.2 connector (110) and a reset signal (SR);
wherein a pin number of the first pin (P1) is 24, and a pin number of the second pin (P2) is 50.

8. The computer-implemented method of the previous claim, wherein
the step of causing the protection circuit (120) to execute the protection process in response to determining that the module inserted into the M.2 connector (110) is the 4G communication technology module (210) comprises:
setting a control flag of a controller (150) as a 4G flag (F1); and
using, according to the 4G flag (F1), the controller (150) to cause the protection circuit (120) to execute the protection process; and
the step of causing the protection circuit (120) not to execute the protection process in response to determining that the module inserted into the M.2 connector (110) is the 5G communication technology module (220) comprises:
setting the control flag as a 5G flag (F2); and
using, according to the 5G flag (F2), the controller (150) to cause the protection circuit (120) not to execute the protection process.

9. The computer-implemented method of claim 7 or 8, wherein the protection circuit (120) comprises a switch module (121) and a tristate buffer (122), the switch module (121) is coupled between the first pin (P1) and the first power supply (V1), an input terminal of the tristate buffer (122) is coupled to the reset signal (SR), and an output terminal of the tristate buffer (122) is coupled to the second pin (P2), wherein the step of blocking the electrical connection between the first pin (P1) of the M.2 connector (110) and the first power supply (V1) is disabling the switch module (121) to disconnect the electrical connection between the first pin (P1) and the first power supply (V1) through the switch module (121), and wherein the step of blocking the electrical connection between the second pin (P2) of the M.2 connector (110) and the reset signal (SR) is disabling the tristate buffer (122), wherein the output terminal of the tristate buffer (122) is in a high-impedance state after the tristate buffer (122) is disabled.

## Patentansprüche

1. Elektronisches Gerät (100), das aufweist:
eine M.2-Verbindungseinrichtung (110), die einen ersten Pin (P1) und einen zweiten Pin (P2) hat;
eine Schutzschaltung (120), die mit dem ersten Pin (P1) und dem zweiten Pin (P2) gekoppelt ist; und
einen Prozessor (130), der konfiguriert ist, um zu bestimmen, ob ein in die M.2-Verbindungseinrichtung (110) eingesetztes Modul ein 4G-Kommunikation-Technologie-Modul (210) oder ein 5G-Kommunikation-Technologie-Modul (220) ist, wobei in Reaktion darauf, dass der Prozessor (130) bestimmt, dass das in die M.2- Verbindungseinrichtung (110) eingesetzte Modul das 4G-Kommunikation-Technologie-Modul (210) ist, der Prozessor (130) konfiguriert ist, um die Schutzschaltung (120) zu veranlassen, einen Schutzvorgang auszuführen, und in Reaktion darauf, dass der Prozessor (130) bestimmt, dass das in die M.2-Verbindungseinrichtung (110) eingesetzte Modul das 5G-Kommunikation-Technologie-Modul (220) ist, wobei der Prozessor (130) konfiguriert ist, um die Schutzschaltung (120) zu veranlassen den Schutzvorgang nicht auszuführen;
**dadurch gekennzeichnet, dass** bei dem Schutzvorgang die Schutzschaltung (120) konfiguriert ist, um eine elektrische Verbindung zwischen dem ersten Pin (P1) und einer ersten Stromzufuhr (V1) zu blockieren und eine elektrische Verbindung zwischen dem zweiten Pin (P2) und einem Rücksetzsignal (SR) zu blockieren;
wobei eine Pin-Nummer des ersten Pins (P1) 24 ist und eine Pin-Nummer des zweiten Pins (P2) 50 ist.

2. Elektronisches Gerät (100) nach dem vorhergehenden Anspruch, das ferner aufweist:
eine Steuereinrichtung (150), die konfiguriert ist, um die Schutzschaltung (120) entsprechend einem Steuerflag zu steuern;
wobei in Reaktion darauf, dass der Prozessor (130) bestimmt, dass das in die M.2-Verbindungseinrichtung (110) eingesetzte Modul das 4G-Kommunikation-Technologie-Modul (210) ist, der Prozessor (130) das Steuerflag als ein 4G-Flag (F1) setzt, sodass die Steuereinrichtung (150) entsprechend dem 4G-Flag (F1) die Schutzschaltung (120) veranlasst, den Schutzvorgang auszuführen; und
wobei in Reaktion darauf, dass der Prozessor (130) bestimmt, dass das in die M.2-Verbindungseinrichtung (110) eingesetzte Modul das 5G-Kommunikation-Technologie-Modul (220) ist, der Prozessor (130) das Steuerflag als ein 5G-Flag (F2) setzt, sodass die Steuereinrichtung (150) entsprechend dem 5G-Flag (F2) die Schutzschaltung (120) veranlasst, den Schutzvorgang nicht auszuführen.

3. Elektronisches Gerät (100) nach irgendeinem der vorhergehenden Ansprüche, wobei die Schutzschaltung (120) aufweist:
ein Schaltmodul (121), das zwischen den ersten Pin (P1) und die erste Stromzufuhr (V1) gekoppelt ist, wobei, beim Schutzvorgang, das Schaltmodul (121) die elektrische Verbindung zwischen dem ersten Pin (P1) und der ersten Stromzufuhr (V1) trennt; und
einen Tristate-Buffer (122), der einen Eingangsanschluss und einen Ausgangsanschluss hat, wobei der Eingangsanschluss mit dem Rücksetzsignal (SR) gekoppelt ist, und der Ausgangsanschluss mit dem zweiten Stift (P2) gekoppelt ist, und wobei beim Schutzvorgang der Ausgangsanschluss des Tristate-Buffers (122) in einem Hochimpedanzzustand ist.

4. Verfahren zum Machen, dass eine einzige M.2- Verbindungseinrichtung kompatibel ist zu einem 4G-Kommunikation-Technologie-Modul (210) und einem 5G-Kommunikation-Technologie-Modul (220), das aufweist:
Bestimmen, ob ein in eine M.2-Verbindungseinrichtung (110) eingesetztes Modul ein 4G-Kommunikation-Technologie-Modul (210) oder ein 5G-Kommunikation-Technologie-Modul (220) ist;
Ausführen eines Schutzvorgangs in Reaktion darauf, dass bestimmt wird, dass das in die M.2-Verbindungseinrichtung (110) eingesetzte Modul das 4G-Kommunikation-Technologie-Modul (210) ist; und
Nicht-Ausführen des Schutzvorgangs in Reaktion darauf, dass bestimmt wird, dass das in die M.2-Verbindungseinrichtung (110) eingeführte Modul das 5G-Kommunikation-Technologie-Modul (220) ist;
**dadurch gekennzeichnet, dass** der Schutzvorgang aufweist:
Blockieren einer elektrischen Verbindung zwischen einem ersten Pin (P1) der M.2-Verbindungseinrichtung (110) und einer ersten Stromzufuhr (V1); und
Blockieren einer elektrischen Verbindung zwischen einem zweiten Pin (P2) der M.2-Verbindungseinrichtung (110) und einem Rücksetzsignal (SR);
wobei eine Pinnummer des ersten Pins (P1) 24 ist und eine Pinnummer des zweiten Pins (P2) 50 ist.

5. Verfahren nach dem vorhergehenden Anspruch, wobei
der Schritt des Ausführens des Schutzvorgangs in Reaktion darauf, dass bestimmt wird, dass das in die M.2-Verbindungseinrichtung (110) eingesetzte Modul das 4G-Kommunikation-Technologie-Modul (210) ist, aufweist:
Setzen eines Steuerflags als ein 4G-Flag (F1); und
Ausführen des Schutzvorgangs entsprechend dem 4G-Flag (F1); und
der Schritt des Nicht-Ausführens des Schutzvorgangs in Reaktion darauf, dass bestimmt wird, dass das in die M.2-Verbindungseinrichtung (110) eingesetzte Modul das 5G-Kommunikation-Technologie-Modul (220) ist, aufweist:
Setzen des Steuerflags als ein 5G-Flag (F2); und
Nicht-Ausführen des Schutzvorgangs entsprechend dem 5G-Flag (F2).

6. Verfahren nach Anspruch 4 oder 5, wobei der Schritt eines Blockierens der elektrischen Verbindung zwischen dem ersten Pin (P1) der M.2-Verbindungseinrichtung (110) und der ersten Stromzufuhr (V1) Deaktivieren eines Schaltmoduls (121) ist, das zwischen dem ersten Pin (P1) und der ersten Stromzufuhr (V1) gekoppelt ist, um die elektrische Verbindung zwischen dem ersten Pin (P1) der M.2-Verbindungseinrichtung (110) und der ersten Stromzufuhr (V1) durch das Schaltmodul (121) zu trennen, und wobei der Schritt des Blockierens der elektrischen Verbindung zwischen dem zweiten Pin (P2) der M.2-Verbindungseinrichtung (110) und dem Rücksetzsignal (SR) Deaktivieren eines Tristate-Buffers (122) ist, der zwischen dem zweiten Pin (P2) der M.2-Verbindungseinrichtung (110) und dem Rücksetzsignal (SR) gekoppelt ist, wobei ein Eingangsanschluss des Tristate-Buffers (122) mit dem Rücksetzsignal (SR) gekoppelt ist und ein Ausgangsanschluss des Tristate-Buffers (122) mit dem zweiten Pin (P2) gekoppelt ist, und wobei der Ausgangsanschluss des Tristate-Buffers (122) in einem Hochimpedanzzustand ist, nachdem der Tristate-Buffer deaktiviert wird.

7. Computerimplementiertes Verfahren zum Machen, dass eine einzige M.2-Verbindungseinrichtung kompatibel ist zu einem 4G-Kommunikation-Technologie-Modul (210) und einem 5G-Kommunikation-Technologie-Modul (220), das die folgenden Schritten aufweist, die von einem Prozessor (130) ausgeführt werden:
Bestimmen, ob ein in einer M.2-Verbindungseinrichtung (110) eingesetztes Modul ein 4G-Kommunikation-Technologie-Modul (210) oder ein 5G-Kommunikation-Technologie-Modul (220) ist;
Veranlassen einer Schutzschaltung (120), um einen Schutzvorgang auszuführen in Reaktion darauf, dass bestimmt wird, dass das in der M.2-Verbindungseinrichtung (110) eingesetzte Modul das 4G-Kommunikation-Technologie-Modul (210) ist, auszuführen; und
Veranlassen der Schutzschaltung (120), um den Schutzvorgang nicht auszuführen in Reaktion darauf, dass bestimmt wird, dass das in den M.2-Verbindungseinrichtung (110) eingesetzte Modul das 5G-Kommunikation-Technologie-Modul (220) ist;
**dadurch gekennzeichnet, dass** der Schutzvorgang aufweist:
Blockieren einer elektrischen Verbindung zwischen einem ersten Pin (P1) der M.2-Verbindungseinrichtung (110) und einer ersten Energiezufuhr (V1); und
Blockieren einer elektrischen Verbindung zwischen einem zweiten Pin (P2) der M.2-Verbindungseinrichtung (110) und einem Rücksetzsignal (SR);
wobei eine Pinnummer des ersten Pins (P1) 24 ist und eine Pinnummer des zweiten Pins (P2) 50 ist.

8. Computerimplementiertes Verfahren nach dem vorhergehenden Anspruch, wobei
der Schritt des Veranlassens der Schutzschaltung (120), um den Schutzvorgang auszuführen in Reaktion darauf, dass bestimmt wird, dass das in der M.2-Verbindungseinrichtung (110) eingesetzte Modul das 4G-Kommunikation-Technologie-Modul (210) ist, aufweist:
Setzen eines Steuerflags einer Steuereinrichtung (150) als ein 4G-Flag (F1); und
Verwenden der Steuereinrichtung (150) entsprechend dem 4G-Flag (F1), um die Schutzschaltung (120) zu veranlassen, den Schutzvorgang auszuführen; und
der Schritt des Veranlassens der Schutzschaltung (120), um den Schutzvorgang nicht auszuführen in Reaktion darauf, dass bestimmt wird, dass das in die M.2-Verbindungseinrichtung (110) eingesetzte Modul das 5G-Kommunikation-Technologie-Modul (220) ist, aufweist:
Setzen des Steuerflags als ein 5G-Flag (F2); und
Verwenden der Steuereinrichtung (150) entsprechend dem 5G-Flag (F2), um die Schutzschaltung (120) zu veranlassen, den Schutzvorgang nicht auszuführen.

9. Computerimplementiertes Verfahren nach Anspruch 7 oder 8, wobei die Schutzschaltung (120) ein Schaltmodul (121) und einen Tristate-Buffer (122) aufweist, das Schaltmodul (121) zwischen den ersten Pin (P1) und die erste Stromzufuhr (V1) gekoppelt ist, ein Eingangsanschluss des Tristate-Buffers (122) mit dem Rücksetzsignal (SR) gekoppelt ist und ein Ausgangsanschluss des Tristate-Buffers (122) mit dem zweiten Pin (P2) gekoppelt ist, wobei der Schritt eines Blockierens der elektrischen Verbindung zwischen dem ersten Pin (P1) der M.2-Verbindungseinrichtung (110) und der ersten Stromzufuhr (V1) Deaktivieren des Schaltmoduls (121) ist, um die elektrische Verbindung zwischen dem ersten Pin (P1) und der ersten Stromzufuhr (V1) durch das Schaltmodul (121) zu trennen, und wobei der Schritt eines Blockierens der elektrischen Verbindung zwischen dem zweiten Pin (P2) der M.2-Verbindungseinrichtung (110) und dem Rücksetzsignal (SR) Deaktivieren des Tristate-Buffers (122) ist, wobei der Ausgangsanschluss des Tristate-Buffers (122) in einem Hochimpedanzzustand ist, nachdem der Tristate-Buffer (122) deaktiviert wird.

## Revendications

1. Dispositif électronique (100), comprenant :
un connecteur M.2 (110) comportant une première broche (P1) et une deuxième broche (P2) ;
un circuit de protection (120) couplé à la première broche (P1) et à la deuxième broche (P2) ; et
un processeur (130) configuré pour déterminer si un module inséré dans le connecteur M.2 (110) est un module de technologie de communication 4G (210) ou un module de technologie de communication 5G (220), dans lequel, en réponse à ce que le processeur (130) détermine que le module inséré dans le connecteur M.2 (110) est le module de technologie de communication 4G (210), le processeur (130) est configuré pour amener le circuit de protection (120) à exécuter un processus de protection, et en réponse à ce que le processeur (130) détermine que le module inséré dans le connecteur M.2 (110) est le module de technologie de communication 5G (220), le processeur (130) est configuré pour amener le circuit de protection (120) à ne pas exécuter le processus de protection ;
**caractérisé en ce que**, dans le processus de protection, le circuit de protection (120) est configuré pour bloquer une connexion électrique entre la première broche (P1) et une première alimentation électrique (V1) et pour bloquer une connexion électrique entre la deuxième broche (P2) et un signal de réinitialisation (SR) ;
dans lequel un numéro de broche de la première broche (P1) est 24, et un numéro de broche de la deuxième broche (P2) est 50.

2. Dispositif électronique (100) selon la revendication précédente, comprenant en outre :
un contrôleur (150) configuré pour contrôler le circuit de protection (120) en fonction d'un drapeau de contrôle ;
dans lequel, en réponse à ce que le processeur (130) détermine que le module inséré dans le connecteur M.2 (110) est le module de technologie de communication 4G (210), le processeur (130) définit le drapeau de contrôle comme un drapeau 4G (F1), de sorte que le contrôleur (150) amène, en fonction du drapeau 4G (F1), le circuit de protection (120) à exécuter le processus de protection ; et
dans lequel, en réponse à ce que le processeur (130) détermine que le module inséré dans le connecteur M.2 (110) est le module de technologie de communication 5G (210), le processeur (130) définit le drapeau de contrôle comme un drapeau 5G (F2), de sorte que le contrôleur (150) amène, en fonction du drapeau 5G (F2), le circuit de protection (120) à ne pas exécuter le processus de protection.

3. Dispositif électronique (100) selon l'une quelconque des revendications précédentes, dans lequel le circuit de protection (120) comprend :
un module de commutation (121) couplé entre la première broche (P1) et la première alimentation électrique (V1), dans lequel, lors du processus de protection, le module de commutation (121) déconnecte la connexion électrique entre la première broche (P1) et la première alimentation électrique (V1) ; et
un tampon à trois états (122) ayant une borne d'entrée et une borne de sortie, dans lequel la borne d'entrée est couplée au signal de réinitialisation (SR), et la borne de sortie est couplée à la deuxième broche (P2), et dans lequel, dans le processus de protection, la borne de sortie du tampon à trois états (122) est dans un état de haute impédance.

4. Procédé pour rendre compatibles un module de technologie de communication 4G (210) et un module de technologie de communication 5G (220) dans un seul connecteur M.2 (110), comprenant :
déterminer si un module inséré dans un connecteur M.2 (110) est un module de technologie de communication 4G (210) ou un module de technologie de communication 5G (220) ;
exécuter un processus de protection en réponse à la détermination que le module inséré dans le connecteur M.2 (110) est le module de technologie de communication 4G (210) ; et
ne pas exécuter le processus de protection en réponse à la détermination que le module inséré dans le connecteur M.2 (110) est le module de technologie de communication 5G (220) ;
**caractérisé en ce que** le processus de protection comprend :
bloquer une connexion électrique entre une première broche (P1) du connecteur M.2 (110) et une première alimentation électrique (V1) ; et
bloquer une connexion électrique entre une deuxième broche (P2) du connecteur M.2 (110) et un signal de réinitialisation (SR) ;
dans lequel un numéro de broche de la première broche (P1) est 24 et un numéro de broche de la deuxième broche (P2) est 50.

5. Procédé selon la revendication précédente, dans lequel
l'étape consistant à exécuter le processus de protection en réponse à la détermination que le module inséré dans le connecteur M.2 (110) est le module de technologie de communication 4G (210) comprend :
définir un drapeau de contrôle comme drapeau 4G (F1) ; et
exécuter le processus de protection en fonction du drapeau 4G (F1) ; et
l'étape consistant à ne pas exécuter le processus de protection en réponse à la détermination que le module inséré dans le connecteur M.2 (110) est le module de technologie de communication 5G (220) comprend :
définir le drapeau de contrôle comme drapeau 5G (F2) ; et
ne pas exécuter le processus de protection en fonction du drapeau 5G (F2).

6. Procédé selon la revendication 4 ou 5, dans lequel l'étape consistant à bloquer la connexion entre la première broche (P1) du connecteur M.2 (110) et la première alimentation électrique (V1) consiste à désactiver un module de commutation (121) couplé entre la première broche (P1) et la première alimentation électrique (V1) pour déconnecter la connexion électrique entre la première broche (P1) et la première alimentation électrique (V1) à travers le module de commutation (121), et dans lequel l'étape consistant à bloquer la connexion électrique entre la deuxième broche (P2) du connecteur M.2 (110) et le signal de réinitialisation (SR) consiste à désactiver un tampon à trois états (122) couplé entre la deuxième broche (P2) et le signal de réinitialisation (SR), dans lequel une borne d'entrée du tampon à trois états (122) est couplée au signal de réinitialisation (SR), et une borne de sortie du tampon à trois états (122) est couplée à la deuxième broche (P2), et dans lequel la borne de sortie du tampon à trois états (122) est dans un état de haute impédance après que le tampon à trois états a été désactivé.

7. Procédé mis en œuvre par ordinateur pour rendre compatibles un module de technologie de communication 4G (210) et un module de technologie de communication 5G (220) dans un seul connecteur M.2 (110), comprenant les étapes suivantes exécutées par un processeur (130) :
déterminer si un module inséré dans un connecteur M.2 (110) est un module de technologie de communication 4G (210) ou un module de technologie de communication 5G (220) ;
amener un circuit de protection (120) à exécuter un processus de protection en réponse à la détermination que le module inséré dans le connecteur M.2 (110) est le module de technologie de communication 4G (210) ; et
amener le circuit de protection (120) à ne pas exécuter le processus de protection en réponse à la détermination que le module inséré dans le connecteur M.2 (110) est le module de technologie de communication 5G (220) ;
**caractérisé en ce que** le processus de protection comprend :
bloquer une connexion électrique entre une première broche (P1) du connecteur M.2 (110) et une première alimentation électrique (V1) ; et
bloquer une connexion électrique entre une deuxième broche (P2) du connecteur M.2 (110) et un signal de réinitialisation (SR) ;
dans lequel un numéro de la première broche (P1) est 24 et un numéro de la deuxième broche (P2) est 50.

8. Procédé mis en œuvre par ordinateur selon la revendication précédente, dans lequel
l'étape consistant à amener le circuit de protection (120) à exécuter le processus de protection en réponse à la détermination que le module inséré dans le connecteur M.2 (110) est le module de technologie de communication 4G (210) comprend :
définir un drapeau de contrôle d'un contrôleur (150) comme drapeau 4G (F1) ; et
utiliser, en fonction du drapeau 4G (F1), le contrôleur (150) pour amener le circuit de protection (120) à exécuter le processus de protection ; et
l'étape consistant à amener le circuit de protection (120) à ne pas exécuter le processus de protection en réponse à la détermination que le module inséré dans le connecteur M.2 (110) est le module de technologie de communication 5G (220) comprend :
définir le drapeau de contrôle comme drapeau 5G (F2) ; et
utiliser, en fonction du drapeau 5G (F2), le contrôleur (150) pour amener le circuit de protection (120) à ne pas exécuter le processus de protection.

9. Procédé mis en œuvre par ordinateur selon la revendication 7 ou 8, dans lequel le circuit de protection (120) comprend un module de commutation (121) et un tampon à trois états (122), le module de commutation (121) est couplé entre la première broche (P1) et la première alimentation électrique (V1), une borne d'entrée du tampon à trois états (122) est couplée au signal de réinitialisation (SR), et une borne de sortie du tampon à trois états (122) est couplée à la deuxième broche (P2), dans lequel l'étape consistant à bloquer la connexion électrique entre la première broche (P1) du connecteur M.2 (110) et la première alimentation électrique (V1) consiste à désactiver le module de commutation (121) pour déconnecter la connexion électrique entre la première broche (P1) et la première alimentation électrique (V1) par l'intermédiaire du module de commutation (121), et dans lequel l'étape consistant à bloquer la connexion électrique entre la deuxième broche (P2) du connecteur M.2 (110) et le signal de réinitialisation (SR) consiste à désactiver le tampon à trois états (122), dans lequel la borne de sortie du tampon à trois états (122) est dans un état de haute impédance après la désactivation du tampon à trois états (122).
